# EUROPÄISCHE PATENTANMELDUNG

(11) **EP 2 706 093 A1**
(43) Veröffentlichungstag der Anmeldung: **12.03.2014**
(21) Anmeldenummer: 12183170.5
(22) Anmeldetag: 05.09.2012
(51) Int. Cl.: C08L 51/06, C08J 7/04, C09J 5/02

(54) **Haftvermittlerzusammensetzung für polyolefinische Membranen**

(71) Anmelder: Sika Technology AG, 6340 Baar (CH)
(72) Erfinder: Jendoubi, Elyes, 8052 Zürich (CH); Haufe, Markus, 8048 Zürich (CH); Carl, Wilfried, 8820 Wädenswil (CH)
(74) Vertreter: Sika Patent Attorneys

(57) **Zusammenfassung**

Zusammensetzung, umfassend
- mindestens ein organisches Polymer
- mindestens ein Monomer aus der Gruppe der Acrylate
- mindestens ein Katalysator aus der Gruppe der tertiären organischen Amine
- mindestens ein Lösungsmittel

## Beschreibung

### Technisches Gebiet

Die Erfindung betrifft das Gebiet von Haftvermittlerzusammensetzungen, die es ermöglichen, Polyolefinische Substrate durch Vorbehandlung der Oberfläche mit der Haftvermittlerzusammensetzung und anschließendes Aufbringen eines Klebstoffs dauerhaft und strukturell zu verkleben.

### Stand der Technik

In vielen Anwendungsgebieten ist es notwendig, polyolefinische Substrate, beispielsweise in Form von polyolefinischen Membranen, mit anderen Substraten dauerhaft zu verkleben. Von besonderer Bedeutung ist dies im Zusammenhang mit Dichtungsbahnen, die beispielsweise zur Abdichtung von Flachdächern, Steildächern, bei der Gebäudeabdichtung oder zur Tunnelabdichtung verwendet werden können. Solche polyolefinischen Substrate, wie Polyethylen, Polypropylen oder EPDM sind bekannt für ihre haftungsunfreundliche Oberfläche. Solche Materialien lassen sich nur dann dauerhaft und strukturell verkleben, wenn sie speziellen Vorbehandlungsmethoden unterzogen werden. Dies sind meist physikalische Vorbehandlungen, bei denen die Oberfläche beispielsweise oxidiert wird, sodass sich der Klebstoff nach Applikation physikalisch oder chemisch anbinden kann.

Aus dem Stand der Technik sind mehrere Verfahren bekannt, das Verbinden von solchen polyolefinischen Membranen mit anderen Substraten zu ermöglichen.

Gemäß einem Verfahren erfolgt das Verbinden durch Heißluftschweißen. Nachteilig an diesem Verfahren ist, dass in der Regel ein Stromanschluss erforderlich ist und dass es nicht bei kleinen engen Geometrien der zu verschweißenden Substrate anwendbar ist. Darüber hinaus ist ein Verbinden von nicht schweißbaren Materialien nach diesem Verfahren nicht möglich. Darüber hinaus führt dieses Verfahren nicht zum Erfolg, wenn die miteinander zu verschweißenden Materialien nicht kompatibel sind. Es ist zwar möglich ein PVC Substrat mit einem PVC-Substrat zu verschweißen oder ein TPO (thermoplastisches Olefin) Substrat mit einem TPO Substrat zu verschweißen. Es ist jedoch nicht möglich, ein TPO Substrat mit einem PVC Substrat zu verschweißen, da diese beiden Polymere in einem Schweißprozess nicht kompatibel sind.

Eine andere Möglichkeit zur strukturellen und dauerhaften Verklebung bei polyolefinischen Substraten mit anderen Substraten ist die physikalischen Vorbehandlung der Oberfläche des polyolefinischen Substrates beispielsweise durch Plasmabehandlung, Beflammen, Ätzen oder ähnlichen Verfahren, wobei im Anschluss an diese physikalischen Vorbehandlung ein Verkleben mit dem anderen Substrat erfolgt. Solche Vorbehandlungsverfahren sind jedoch aufwendig und kostenintensiv. Darüber hinaus kann die Vorbehandlung nicht vor Ort durchgeführt werden, sondern muss bereits in der Herstellung integriert sein. Da die Wirkung der Vorbehandlung mit der Zeit abklingt, ist die Lagerzeit für so vorbehandelte Substrate eingeschränkt, was zu einer mangelnden Reproduzierbarkeit der Verbundfestigkeit nach Verkleben der Substrate führt.

Ebenfalls im Stand der Technik bekannt ist der Einsatz von Polyolefinprimern, bestehend aus Chloropren-Kautschuk oder chlorierten Polyolefinen in einem geeigneten Lösungsmittel. Durch Vorbehandlung der Oberfläche des polyolefinischen Substrats mit einem solchen Primer kann eine gute Verbundfestigkeit im Neuzustand und nach Warmluftalterung erzielt werden. Es hat sich jedoch gezeigt, dass bei Lagerung unter feuchten Bedingungen (Warmwasser bzw. 100% Luftfeuchtigkeit) bei erhöhten Temperaturen (z. B. 60°C) die Haftung innerhalb kürzester Zeit schnell abnimmt.

Ebenfalls aus dem Stand der Technik bekannt ist die Verwendung von Boraninitiierten Klebstoffen zur Verklebung von polyolefinischen Substraten mit anderen Substraten. Der Nachteil dieser Klebstoffe ist allerdings ihr hoher Preis und die nur geringe Lagerstabilität bei 23°C. Darüber hinaus haben diese Klebstoffe den Nachteil, dass die Offenzeit verhältnismäßig kurz, die Aushärtezeit jedoch sehr lang ist.

### Darstellung der Erfindung

Aufgabe der vorliegenden Erfindung ist es daher, Zusammensetzungen bereitzustellen, die eine dauerhafte und strukturelle Verklebung von polyolefinischen Substraten mit anderen Substraten ermöglichen. Eine weitere Aufgabe der vorliegenden Erfindung besteht darin, ein Verfahren bereitzustellen, das dauerhafte und strukturelle Verklebung von polyolefinischen Substraten mit anderen Substraten ermöglicht.

Überraschenderweise wurde gefunden, dass die Zusammensetzung gemäß Anspruch 1 diese Aufgabe löst.

Darüber hinaus wird die Aufgabe auch durch das Verfahren gemäß Anspruch 9 gelöst.

Bevorzugte Ausführungsformen finden sich in den abhängigen Ansprüchen.

### Wege zur Ausführung der Erfindung

Gegenstand der vorliegenden Erfindung ist eine Zusammensetzung umfassend
- mindestens ein organisches Polymer
- mindestens ein Monomer aus der Gruppe der Acrylate
- mindestens ein Katalysator aus der Gruppe der tertiären organischen Amine
- mindestens ein Lösungsmittel

Die beschriebene lösungsmittelhaltige Zusammensetzung ist in der Lage, die Oberfläche von polyolefinischen Substraten so zu aktivieren, dass diese sich anschließend mit einem Klebstoff, insbesondere mit einem Acrylatklebstoff, dauerhaft und strukturell mit anderen Substraten verkleben lassen.

Bei der erfindungsgemäßen Zusammensetzung handelt es sich um eine niedrigviskose lösungsmittelhaltige Flüssigkeit, die auf die zu behandelnde Oberfläche vorzugsweise durch Aufpinseln oder Besprühen aufgetragen wird. Die Zusammensetzung bildet nach dem Trocknen einen Film auf der Oberfläche, der als "Polaritätsvermittler" zwischen den Materialien wirkt und mit den Polyolefinen des Substrates sowie den Bestandteilen des Klebstoffes interagieren kann. Zudem beinhaltet die Zusammensetzung reaktive Substanzen, die bei der Aushärtung des Klebstoffes beteiligt werden und somit einen dauerhaften Verbund der Oberfläche ermöglichen.

Mit "Poly" beginnende Substanznamen wie beispielsweise Polyolefin bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, die durch eine Polyreaktion (Polymerisation, Polyaddition, Polykondensation) hergestellt wurden. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heißt reaktive oligomere Voraddukte, deren funktionelle Gruppen am Aufbau von Makromolekülen beteiligt sind.

Unter "Molekulargewicht" versteht man im vorliegenden Dokument stets das Zahlenmittel des Molekulargewichts Mₙ.

Typische Anwendungsgebiete der erfindungsgemäßen Zusammensetzung sind die Vorbehandlung von polyolefinischen Substraten zur Verklebung in Zusammenhang mit Roofing, Waterproofing, sowie zur Verklebung von Dichtungsbahnen für Flachdach-, Steildach-, Gebäudeabdichtung und Tunnelabdichtung.

Vorzugsweise liegen die erfindungsgemäßen Zusammensetzungen so vor, dass das organische Polymer, das Monomer aus der Gruppe der Acrylate und der Katalysator aus der Gruppe der tertiären organischen Amine vollständig in dem Lösungsmittel gelöst vorliegt.

Die Herstellung der erfindungsgemäßen Zusammensetzung erfolgt vorzugsweise durch Lösen des Polymers, des Monomers aus der Gruppe der Acrylate und des Katalysators aus der Gruppe der tertiären organischen Amine in dem Lösungsmittel unter Rühren, beispielsweise bei etwa 80°C für etwa 3 Stunden unter Rückfluss.

Besonders geeignet sind die erfindungsgemäßen Zusammensetzungen für ein dauerhaftes Verbinden von polyolefinischen Membranen, genannt FPO oder TPO (flexibles Polyolefin oder thermoplastisches Polyolefin), mit Klebstoffen, wobei Acrylatklebstoffe besonders bevorzugt sind. Durch Vorbehandlung mit diesen Zusammensetzungen können FPO-Membranen mit anderen FPO-Membranen oder auch mit anderen Substraten verklebt werden, auf denen der Klebstoff eine gute und dauerhafte Verbindung zeigt. Zu den Nicht-FPO Substraten zählen im Sinne der vorliegenden Erfindung insbesondere PVC-Membranen und starre Substrate (Kunststoff, Beton und/oder Metall).

Unter dem dauerhaften Verbinden wird im Zusammenhang mit der vorliegenden Erfindung eine Verklebung verstanden, die auch nach natürlicher und künstlicher Alterung eine hohe Verbundfestigkeit aufweist.

Die erfindungsgemäße Zusammensetzung zeichnet sich insbesondere dadurch aus, dass sie einen Verbund von polyolefinischen Substraten mit anderen Substraten ermöglichen, die eine ausgesprochen hohe Alterungsfähigkeit aufweisen.

Als Klebstoffe zur Verklebung der Substrate nach Vorbehandlung der polyolefinischen Substrate mit der erfindungsgemäßen Zusammensetzung eignen sich insbesondere zweikomponentige Acrylatklebstoffe, wobei Tetrahydrofurfurylmethacrylat- oder Methylmethacrylat-basierte Systeme mit Peroxid-Initiierung besonders bevorzugt sind. Nach dem Auftrag der erfindungsgemäßen Zusammensetzung und Eintrocknen unter Filmbildung kann beispielsweise durch den Einsatz von solchen zweikomponentigen Acrylatklebstoffen eine Klebeverbindung hergestellt werden, die sich auch nach Alterung durch unerwartet hohe Klebkräfte auszeichnet.

In einer besonders bevorzugten Ausführungsform ist die erfindungsgemäße Zusammensetzung so ausgestaltet, dass das mindestens eine organische Polymer mindestens ein chloriertes Polyolefin, das auf Hart- oder Weich-Polypropylen basiert, mit einem Chlorierungsgrad von 20 bis 30% und/oder mindestens ein Maleinsäureanhydrid modifiziertes Polyolefin umfasst.

Besonders gute Ergebnisse werden erzielt, wenn das mindestens eine organische Polymer eines oder mehrere Polymere aus folgenden umfasst:
Ein hart-Polyolefin mit Chlorierungsgrad von 20-30% und einem Molekulargewicht von 150000 g/mol (Poly1).
Ein weich-Polyolefin mit Chlorierungsgrad von 20-30% und einem Molekulargewicht von 100000 g/mol (Poly2).
Ein hart-Polyolefin mit Chlorierungsgrad von 20-30%, einem Maleinsäureanhydridgehalt von 1 bis 2% und einem Molekulargewicht von 60000 g/mol (Poly3).
Ein weich-Polyolefin mit Chlorierungsgrad von 20-30%, einem Maleinsäureanhydridgehalt von 1 bis 2% und einem Molekulargewicht von 65000 g/mol (Poly4).

Die erfindungsgemäßen Zusammensetzungen weisen darüber hinaus mindestens ein Monomer aus der Gruppe der Acrylate auf. Während prinzipiell alle Monomeren aus der Gruppe der Acrylate geeignet sind, hat sich gezeigt, dass besonders gute Ergebnisse erzielt werden, wenn das mindestens eine Monomer aus der Gruppe der Acrylate einen Acrylatester und/oder ein Methacrylatester, insbesondere in Form von einem oder mehreren aus Methylmethacrylat, Butylmethacrylat und Laurylmethacrylat umfasst.

Die erfindungsgemäßen Zusammensetzungen weisen darüber hinaus mindestens einen Katalysator aus der Gruppe der tertiären organischen Amine auf. Als besonders geeignet haben sich aromatische tertiäre Amine erwiesen.

Beispiele für geeignete tertiäre aromatische Amine sind insbesondere tertiäre aromatische Amine, ausgewählt aus der Gruppe bestehend aus: N,N-Dimethylanilin, N,N-Diethylanilin, N,N-Bis(hydroxyalkyl)anilin wie N,N-Bis(2-hydroxyethyl)anilin, N,N-Alkylhydroxyalkylanilin wie N-Ethyl-N-hydroxyethylanilin, N,N-Dimethyl-p-toluidin, N,N-Diethyl-p-toluidin, N-Methyl-N-hydroxyethyl-p-toluidin, N,N-Bis(2-hydroxyethyl)-p-toluidin sowie alkoxylierte N,N-Bis-(hydroxyethyl)-p-toluidine, N-ethoxyliertes p-Toluidin, N,N-Bis(2-hydroxyethyl)-xylidin, N-Alkylmorpholin und Mischungen davon.

In einer besonders bevorzugten Ausführungsform ist die erfindungsgemäße Zusammensetzung so ausgestaltet, dass der mindestens eine Katalysator aus der Gruppe der tertiären organischen Amine N,N-bis-(2-hydroxyethyl)-paratoluidin (Bisomer PTE) umfasst.

In einer besonders bevorzugten Ausführungsform ist das mindestens eine Lösungsmittel ein organisches Lösungsmittel, wobei Lösungsmittel aus der Gruppe der aromatischen Lösungsmittel, insbesondere Alkylaromaten besonders bevorzugt sind. Es hat sich gezeigt, dass besonders gute Ergebnisse erzielt werden, wenn als Lösungsmittel Xylol eingesetzt wird.

Besonders bevorzugt ist es, dass die erfindungsgemäßen Zusammensetzungen so vorliegen, dass sämtliche Bestandteile in dem Lösungsmittel gelöst vorliegen.

Besonders gute Ergebnisse werden erzielt, wenn die erfindungsgemäße Zusammensetzung so ausgestaltet ist, dass die einzelnen Komponenten in einem solchen Gewichtsverhältnis vorliegen, das die Haftvermittlerzusammensetzung umfasst:
- etwa 1 bis 10 Gewichtsteile, insbesondere etwa 4 bis 7 Gewichtsteile mindestens eines organischen Polymers
   - etwa 3 bis 20, insbesondere etwa 10 bis 15 Gewichtsteile mindestens eines Monomers aus der Gruppe der Acrylate
   - etwa 3 bis 16, insbesondere etwa 5 bis 10 Gewichtsteile mindestens eines Katalysators aus der Gruppe der tertiären organischen Amine
   - etwa 54 bis 93 Gewichtsteile, insbesondere etwa 68 bis 87 Gewichtsteile mindestens eines Lösungsmittels.

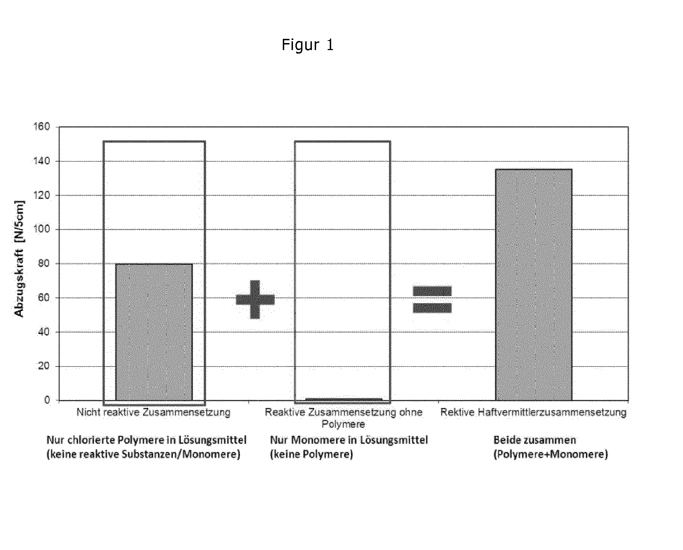

Es hat sich gezeigt, dass die erfindungsgemäßen Zusammensetzungen überraschenderweise nach Auftragen und Trocknen auf unpolaren Oberflächen als Haftvermittler wirken. Dabei vermuten die Erfinder, dass gerade die Kombination aus einem Polymer (nicht-reaktiv) mit einem Monomer aus der Gruppe der Acrylate (reaktiv) in Zusammenwirken mit den anderen Bestandteilen Lösungsmittel und Katalysator zu der überraschend guten Wirkung als Haftvermittler führen. Dieses Prinzip ist in der Figur 1 schematisch dargestellt.

Gegenstand der vorliegenden Erfindung ist auch die Verwendung der erfindungsgemäßen Zusammensetzung zur Behandlung der Oberfläche eines polyolefinischen Substrats. Durch diese Behandlung, die vorzugsweise durch Aufpinseln oder Besprühen der Oberfläche des zu behandelnden polyolefinischen Substrates und anschließendes Eintrocknen der zu behandelnden Stelle erfolgt, wird die Oberfläche des zu behandelnden Substrates so aktiviert, dass in einem anschließenden Schritt ein dauerhaftes Verbinden der so behandelten Oberfläche mit einem anderen Substrat, beispielsweise durch Einsatz eines Acrylatklebstoffes, ermöglicht wird.

Ein weiterer Gegenstand der vorliegenden Erfindung ist ein Verfahren zur Oberflächenbehandlung eines polyolefinischen Substrates. Das erfindungsgemäße Verfahren ist so ausgestaltet, dass eine erfindungsgemäße Zusammensetzung auf die Oberfläche eines polyolefinischen Substrates aufgetragen und anschließend getrocknet wird.

In einer bevorzugten Ausführungsform des erfindungsgemäßen Verfahrens wird nach dem Trocknen der aufgetragenen Zusammensetzung ein Klebstoff auf die so vorbehandelte Stelle aufgetragen und das polyolefinische Substrat anschließend mit einem anderen Substrat verklebt. Für die Verklebung des vorbehandelten polyolefinischen Substrats wird vorzugsweise ein Acrylatklebstoff, insbesondere in Form eines zweikomponentigen Acrylatklebstoffes eingesetzt, wobei bevorzugt Tetrahydrofurfurylmethacrylat- oder Methylmethacrylat-basierte Systeme mit Peroxid-Initiierung zum Einsatz kommen.

In einer besonders bevorzugten Ausführungsform des erfindungsgemäßen Verfahrens handelt es sich bei dem polyolefinischen Substrat um eine Dichtungsbahn, insbesondere aus dem Bereich Flachdachabdichtung, Steildachabdichtung, Gebäudeabdichtung und/oder Tunnelabdichtung, wobei ein Verkleben beispielsweise mit einer thermoplastischen Olefinmembran, einer PVC Membran, einem metallischen Substrat oder einem Betonsubstrat erfolgt.

Die erfindungsgemäße Lehre wird durch die nun folgenden Beispiele noch näher erläutert.

### Beispiele

### Beispiel 1

### Bestimmung der Abzugskraft (peel force) bei der Vorbehandlung mit der erfindungsgemäßen Zusammensetzung in Abhängigkeit vom Polymergehalt der Zusammensetzung.

Es wurde eine Zusammensetzung zur Vorbehandlung von polyolefinischen Substraten mit den folgenden Bestandteilen hergestellt:

| | |
|---|---|
| Polymermischung | Poly1, Poly2, Poly3 und Poly4 (s. S.6) |
| Monomerbestandteil | Butylmethacrylat |
| Katalysator | Bisomer PTE |
| Lösungsmittel | Xylol |

Aus den genannten Bestandteilen wurde eine erfindungsgemäße Zusammensetzung hergestellt, wobei folgende Mengenverhältnisse eingesetzt wurden:

| | |
|---|---|
| Polymerbestandteil | 0,1,2,3,4,5,6,7,8, 9 und 10 Gew.% |
| Monomerbestandteil | 10 Gew.% |
| Katalysator | 6 Gew.% |
| Lösungsmittel Gew.% | 84, 83, 82, 81, 80, 79, 78, 77, 76, 75 und 74 |

Durch Variation des Gewichtsanteils des Polymerbestandteils von 0 bis 10 Gew.% konnte eine Optimierung des Polymeranteils durchgeführt werden.

Zu diesem Zweck wurde das Substrat Sarnafil FPO Roofing Membrane mit den erfindungsgemäßen Zusammensetzungen vorbehandelt und nach 30minütigem Trocknen durch Einsatz des Klebers SikaFast^{®}-5221 mit dem Substrat Sarnafil FPO Roofing Membrane verklebt.

Nach Aushärtung der Klebeverbindung für 4 Stunden bei 23°C wurde die Abzugskraft (peel force) der Klebeverbindung für die Zusammensetzungen mit den unterschiedlichen Polymeranteilen bestimmt.

Die Ergebnisse für die unterschiedlichen Polymergehalte sind in Tabelle 1 aufgelistet.

**Tabelle 1**

| Konzentration [%] | Abzugskraft [N/5cm] |
|---|---|
| 0 | 1 |
| 1 | 18 |
| 2 | 21.5 |
| 3 | 54 |
| 4 | 75 |
| 5 | 75 |
| 6 | 75 |
| 7 | 61.5 |
| 8 | 52 |

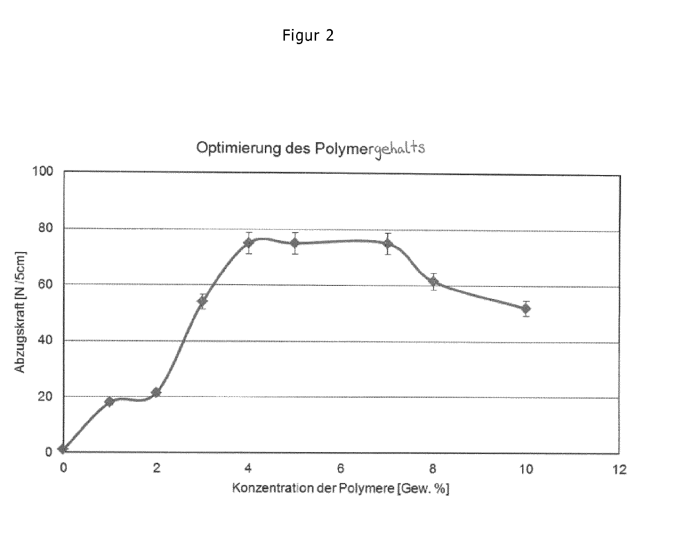

Die in Tabelle 1 wiedergegebenen Ergebnisse werden in Figur 2 grafisch dargestellt.

### Beispiel 2

### Bestimmung der Abzugskraft (peel force) bei der Vorbehandlung mit der erfindungsgemäßen Zusammensetzung in Abhängigkeit vom Monomergehalt der Zusammensetzung.

Es wurde eine Zusammensetzung zur Vorbehandlung von polyolefinischen Substraten mit den folgenden Bestandteilen hergestellt:

| | |
|---|---|
| Polymermischung | Poly1, Poly2, Poly3 und Poly4 (s. S.6) |
| Monomerbestandteil | Butylmethacrylat |
| Katalysator | Bisomer PTE |
| Lösungsmittel | Xylol |

Aus den genannten Bestandteilen wurde eine erfindungsgemäße Zusammensetzung hergestellt, wobei folgende Mengenverhältnisse eingesetzt wurden:

| | |
|---|---|
| Polymerbestandteil | 6 Gew.% (je Polymer 1.5 Gew.%) |
| Monomerbestandteil | 0, 3, 6, 12, 20 Gew.% |
| Katalysator | 6 Gew.% |
| Lösungsmittel | 88, 85, 82, 76 und 68 Gew.% |

Durch Variation des Gewichtsanteils des Monomerbestandteils von 0 bis 20 Gew.% konnte eine Optimierung des Monomeranteils durchgeführt werden.

Zu diesem Zweck wurde das Substrat Sarnafil FPO Roofing Membrane mit den erfindungsgemäßen Zusammensetzung vorbehandelt und nach 30minütigem Trocknen durch Einsatz des Klebers SikaFast^{®}-5221 mit dem Substrat Sarnafil FPO Roofing Membrane verklebt.

Nach Aushärtung der Klebeverbindung für 4 Stunden bei 23°C wurde die Abzugskraft (peel force) der Klebeverbindung für die Zusammensetzungen mit den unterschiedlichen Monomeranteilen bestimmt.

Die Ergebnisse für die unterschiedlichen Monomergehalte sind in Tabelle 2 aufgelistet.

**Tabelle 2**

| Konzentration [%] | Abzugskraft [N/5cm] |
|---|---|
| 0 | 127 |
| 3 | 130 |
| 6 | 140 |
| 12 | 198 |
| 20 | 147 |

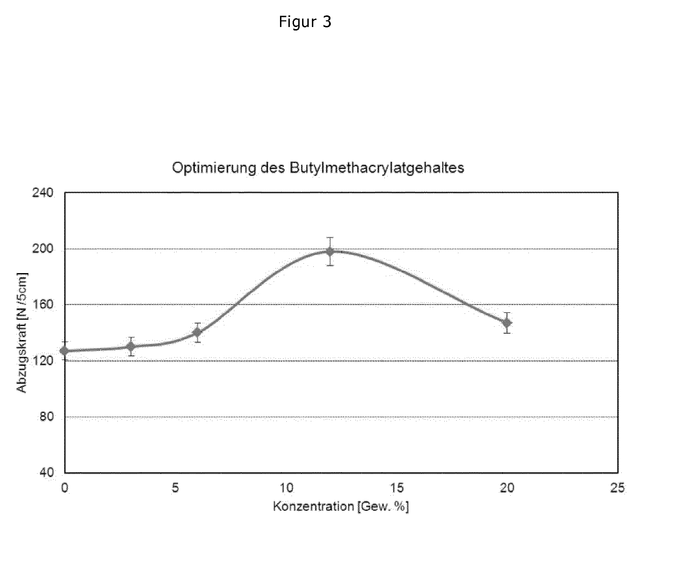

Die in Tabelle 2 wiedergegebenen Ergebnisse werden in Figur 3 grafisch dargestellt.

### Beispiel 3

### Bestimmung der Abzugskraft (peel force) bei der Vorbehandlung mit der erfindungsgemäßen Zusammensetzung in Abhängigkeit vom Katalysatorgehalt der Zusammensetzung.

Es wurde eine Zusammensetzung zur Vorbehandlung von polyolefinischen Substraten mit den folgenden Bestandteilen hergestellt:

| | |
|---|---|
| Polymermischung | Poly1, Poly2, Poly3 und Poly4 (s. S.6) |
| Monomerbestandteil | Butylmethacrylat |
| Katalysator | Bisomer PTE |
| Lösungsmittel | Xylol |

Aus den genannten Bestandteilen wurde eine erfindungsgemäße Zusammensetzung hergestellt, wobei folgende Mengenverhältnisse eingesetzt wurden:

| | |
|---|---|
| Polymerbestandteil | 6 Gew.% (je Polymer 1.5 Gew.%) |
| Monomerbestandteil | 10 Gew.% |
| Katalysator | 0, 3, 6, 12 Gew.% |
| Lösungsmittel | 84, 81, 78 und 72 Gew.% |

Durch Variation des Gewichtsanteils des Katalysatorbestandteils von 0 bis 12 Gew.% konnte eine Optimierung des Katalysatoranteils durchgeführt werden.

Zu diesem Zweck wurde das Substrat Sarnafil FPO Roofing Membrane mit den erfindungsgemäßen Zusammensetzung vorbehandelt und nach 30minütigem Trocknen durch Einsatz des Klebers SikaFast^{®}-5221 mit dem Substrat Sarnafil FPO Roofing Membrane verklebt.

Nach Aushärtung der Klebeverbindung für 4 Stunden bei 23°C wurde die Abzugskraft (peel force) der Klebeverbindung für die Zusammensetzungen mit den unterschiedlichen Polymeranteilen bestimmt.

Die Ergebnisse für die unterschiedlichen Katalysatorgehalte sind in Tabelle 3 aufgelistet.

**Tabelle 3**

| Konzentration [%] | Abzugskraft [N/5cm] |
|---|---|
| 0 | 86 |
| 3 | 93 |
| 6 | 135 |
| 12 | 121 |

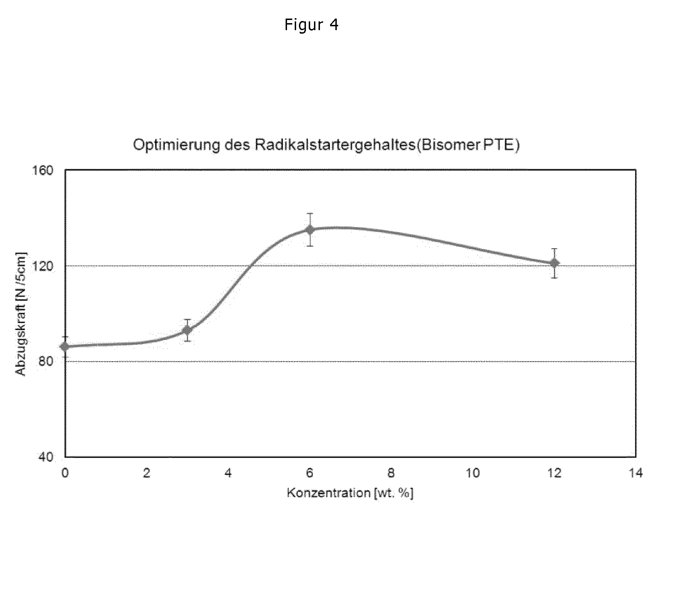

Die in Tabelle 3 wiedergegebenen Ergebnisse werden in Figur 4 grafisch dargestellt.

### Beispiel 4

### Vergleich der erfindungsgemäßen Zusammensetzung mit Zusammensetzungen aus dem Stand der Technik

Für den Vergleichsversuch wurde eine erfindungsgemäße Zusammensetzung verwendet, die folgende Bestandteile in folgenden Gewichtsverhältnissen enthielt:

| | |
|---|---|
| Polymerbestandteil | 6 Gew.% (je Polymer 1.5 Gew.%) |
| Monomerbestandteil | 10 Gew.% |
| Katalysator | 6 Gew.% |
| Lösungsmittel | 78 Gew.% |

Für die Vergleichsversuche wurde ein TPO-Substrat mit der erfindungsgemäßen Zusammensetzung vorbehandelt und nach 30minütigem Trocknen durch Einsatz des Klebers SikaFast^{®}-5221 mit einem TPO-Substrat verklebt.

Nach Aushärtung der Klebeverbindung für 4 Stunden bei 23°C wurde die Abzugskraft (peel force) der Klebeverbindung bestimmt. Des Weiteren wurde die Abzugskraft nach Alterung in Wasser während 28 Tagen bei 70°C bestimmt. Die gleichen Versuche wurden auch mit aus dem Stand der Technik bekannten Vorbehandlungszusammensetzungen durchgeführt. Das Ergebnis ist in Tabelle 4 gezeigt.

**Tabelle 4**

| **Beispiele für die Alterung (4 Wochen 70 °C Warmwasser):** | | |
|---|---|---|
| TPO-TPO Verklebungen | **Peel Force [N/5cm]** | |
| **Primer** | Initial | Nach Alterung |
| ROWA Primer: Trapylen 187 EAC | 60 | 0 |
| 5% Polymer (Toyobo Hardlen F-2P) gelöst in THF+Xylol(50:50) | 80 | 0 |
| 5% Polymer (Toyobo Hardlen 16-LP) gelöst in THF+Xylol(50:50) | 60 | 0 |
| Erfindungsgemässe Zusammensetzung | 135 | 140 |

Für ein weiteres Vergleichsbeispiel wurde ein TPO-Substrat mit der erfindungsgemäßen Zusammensetzung vorbehandelt und nach 30minütigem Trocknen durch Einsatz des Klebers SikaFast^{®}-5221 mit einem PVC-Substrat verklebt.

Nach Aushärtung der Klebeverbindung für 4 Stunden bei 23°C wurde die Abzugskraft (peel force) der Klebeverbindung bestimmt. Des Weiteren wurde die Abzugskraft nach Alterung in Wasser während 28 Tagen bei 70°C bestimmt. Die gleichen Versuche wurden auch mit aus dem Stand der Technik bekannten Vorbehandlungszusammensetzungen durchgeführt. Das Ergebnis ist in Tabelle 5 gezeigt.

Tabelle 5

| **TPO-PVC Verklebungen** | **Peel Force [N/5cm]** | |
|---|---|---|
| **Primer** | Initial | Nach Alterung |
| ROWA Primer: Trapylen 187 EAC | 11 | 0 |
| 5% Polymer (Toyobo Hardlen F-2P) gelöst in THF+Xylol(50:50) | 12 | 0 |
| 5% Polymer (Toyobo Hardlen 16-LP) gelöst in THF+Xylol(50:50) | 15 | 0 |
| Erfindungsgemässe Zusammensetzung | 140 | 200 |

## Patentansprüche

1. Zusammensetzung, umfassend
- mindestens ein organisches Polymer
- mindestens ein Monomer aus der Gruppe der Acrylate
- mindestens ein Katalysator aus der Gruppe der tertiären organischen Amine
- mindestens ein Lösungsmittel.

2. Zusammensetzung gemäß Anspruch 1, **dadurch gekennzeichnet, dass** das mindestens eine organische Polymer mindestens ein chloriertes Polyolefin, das auf Hart- oder Weich-Polypropylen basiert, mit einem Chlorierungsgrad von 20 bis 30% und/oder mindestens ein Maleinsäureanhydrid modifiziertes Polyolefin umfasst.

3. Zusammensetzung gemäß Anspruch 1 oder 2, **dadurch gekennzeichnet, dass** das mindestens eine organische Polymer eines oder mehrere aus folgenden umfasst:
ein hart-Polyolefin mit Chlorierungsgrad von 20-30% und einem Molekulargewicht von 150000 g/mol (Poly1);
ein weich-Polyolefin mit Chlorierungsgrad von 20-30% und einem Molekulargewicht von 100000 g/mol (Poly2);
ein hart-Polyolefin mit Chlorierungsgrad von 20-30%, einem Maleinsäureanhydridgehalt von 1 bis 2% und einem Molekulargewicht von 60000 g/mol (Poly3);
ein weich-Polyolefin mit Chlorierungsgrad von 20-30%, einem Maleinsäureanhydridgehalt von 1 bis 2% und einem Molekulargewicht von 65000 g/mol (Poly4).

4. Zusammensetzung gemäß mindestens einem der Ansprüche 1 bis 3,
**dadurch gekennzeichnet, dass** das mindestens eine Monomer aus der Gruppe der Acrylate einen Acrylatester und/oder einem Methacrylatester, insbesondere in Form von einem oder mehreren aus Methylmethacrylat, Butylmethacrylat und Laurylmethacrylat umfasst.

5. Zusammensetzung gemäß mindestens einem der vorhergehenden Ansprüche, **dadurch gekennzeichnet, dass** der mindestens eine Katalysator aus der Gruppe der tertiären organischen Amine ein Anilin-Derivat (bevorzugt ein Toluidin-Derivat wie z.B. N,N-Bis-(2-Hydroxyethyl)-para-Toluidin (Bisomer PTE)) ist.

6. Zusammensetzung gemäß mindestens einem der vorgehenden Ansprüche, **dadurch gekennzeichnet, dass** das mindestens eine Lösungsmittel ein oder mehrere organische Lösungsmittel aus der Gruppe der Alkylaromaten, insbesondere Xylol umfasst.

7. Zusammensetzung gemäß mindestens einem der vorgehenden Ansprüche, **dadurch gekennzeichnet, dass** die Haftvermittlerzusammensetzung umfasst:
- etwa 1 bis 10 Gewichtsteile, insbesondere etwa 4 bis 7 Gewichtsteile mindestens eines organischen Polymers
- etwa 3 bis 20, insbesondere etwa 10 bis 15 Gewichtsteile mindestens eines Monomers aus der Gruppe der Acrylate
- etwa 3 bis 16, insbesondere etwa 5 bis 10 Gewichtsteile mindestens eines Katalysators aus der Gruppe der tertiären organischen Amine
- etwa 54 bis 93 Gewichtsteile, insbesondere etwa 68 bis 87 Gewichtsteile mindestens eines Lösungsmittels.

8. Verwendung einer Zusammensetzung gemäß mindestens einem der Ansprüche 1 bis 7 zur Behandlung der Oberfläche eines polyolefinischen Substrates, um dessen Verklebbarkeit mit einem anderen Substrat zu verbessern.

9. Verfahren zu Oberflächenbehandlung eines polyolefinischen Substrates, **dadurch gekennzeichnet, dass** eine Zusammensetzung gemäß mindestens einem der Ansprüche 1 bis 7 auf die Oberfläche des polyolefinischen Substrates aufgetragen und anschließend getrocknet wird.

10. Verfahren gemäß Anspruch 9, **dadurch gekennzeichnet, dass** nach Trocknen der aufgetragenen Zusammensetzung ein Klebstoff aufgetragen wird und das polyolefinische Substrat anschließend mit einem anderen Substrat verklebt wird.

11. Verfahren gemäß Anspruch 9 oder 10, **dadurch gekennzeichnet, dass** nach dem Trocknen der aufgetragenen Zusammensetzung ein Klebstoff aufgetragen wird, insbesondere in Form eines zweikomponentigen Acrylatklebstoffs in Form eines Tetrahydrofurfurylmethacrylat- oder Methylmethacrylat-basierten Systems mit Peroxid- oder Hydroperoxid-Initiierung.

12. Verfahren gemäß mindestens einem der Ansprüche 9 bis 11, **dadurch gekennzeichnet, dass** das polyolefinische Substrat eine Dichtungsbahn ist, insbesondere aus dem Bereich Flachdachabdichtung, Steildachabdichtung, Gebäudeabdichtung und/oder Tunnelabdichtung, und das Verkleben mit einer thermoplastischen Olefinmembran, einer PVC Membran, einem metallischen Substrat, einem Betonsubstrat oder Substraten, die zum Zweck der Dämmung und Isolierung eingesetzt werden, erfolgt.
